# EUROPEAN PATENT APPLICATION

(11) **EP 4 700 211 A1**
(43) Date of publication of application: **25.02.2026**
(21) Application number: 25191207.7
(22) Date of filing: 23.07.2025
(51) Int. Cl.: F01D 5/18, F01D 21/00, G01N 25/72, G01J 5/00

(54) **APPARATUS, SYSTEM, AND METHOD FOR INSPECTING A COMPONENT**

(30) Priority: 23.08.2024 GB 202412431
(71) Applicant: Rolls-Royce plc, London N1 9FX (GB)
(72) Inventor: Van Heeswijk, Glynn C, Derby, DE24 8BJ (GB); McLaren, Benjamin A, Derby, DE24 8BJ (GB)
(74) Representative: Rolls-Royce plc

(57) **Abstract**

An apparatus (100) for inspecting a gas turbine engine component (10) having a plurality of cooling apertures (12) includes a main body (110) including a plurality of body apertures (122) configured to at least partially align with the plurality of cooling apertures (12). Each body aperture (122) from the plurality of body apertures (122) extends through the main body (110). The apparatus (100) further includes a seal (160) connected or connectable to the main body (110) and configured to engage with the gas turbine engine component (10). The seal (160) includes a plurality of seal apertures (166) corresponding to the plurality of body apertures (122). Each seal aperture (166) from the plurality of seal apertures (166) extends through the seal (160). The plurality of seal apertures (166) is at least partially aligned with the plurality of body apertures (122) of the main body (110), such that the plurality of seal apertures (166) is disposed or disposable in fluid communication with the plurality of body apertures (122).

## Description

### FIELD

This disclosure relates to an apparatus, a system, and a method for inspecting a gas turbine engine component.

### BACKGROUND

Many components, such as heatshields, liners, tiles, and turbine blades of a gas turbine engine may be subjected to high thermal loads for prolonged periods of time. Such components may include cooling apertures through which a cooling fluid may be directed to increase the usable life of the components.

The components may include complex designs of the cooling apertures for improved cooling performance. Such complex designs of the cooling apertures may cause difficulties in inspection of the components, or more specifically, the cooling apertures of the components. For example, the cooling apertures may be designed to form a film of air along a hot-side surface of the components to improve cooling performance. However, the film of air may interfere with the inspection of the plurality of cooling apertures of the components.

### SUMMARY

In a first aspect, there is provided an apparatus for inspecting a gas turbine engine component having a plurality of cooling apertures. The apparatus includes a main body including a plurality of body apertures configured to at least partially align with the plurality of cooling apertures of the gas turbine engine component. Each body aperture from the plurality of body apertures extends through the main body. The apparatus further includes a seal connected or connectable to the main body. The seal is configured to engage with the gas turbine engine component. The seal includes a plurality of seal apertures corresponding to the plurality of body apertures. Each seal aperture from the plurality of seal apertures extends through the seal. The plurality of seal apertures is at least partially aligned with the plurality of body apertures of the main body, such that the plurality of seal apertures is disposed or disposable in fluid communication with the plurality of body apertures.

The apparatus may improve an inspection of the gas turbine engine component. Specifically, the apparatus may facilitate obtaining accurate and precise data associated with the plurality of cooling apertures of the gas turbine engine component. The apparatus may be suitable for use with gas turbine engine components having complex designs of the plurality of cooling apertures.

The apparatus may be arranged in a testing configuration with respect to the gas turbine engine component to carry out the inspection. In the testing configuration, the plurality of seal apertures is at least partially aligned with the plurality of cooling apertures, and the plurality of body apertures is at least partially aligned with the plurality of seal apertures, such that the plurality of body apertures is disposed in fluid communication with the plurality of cooling apertures of the gas turbine engine component.

In some embodiments, thermographic inspection may be carried out using the apparatus in the testing configuration by directing a flow of air through the plurality of cooling apertures of the gas turbine engine component, such that the air egresses from the plurality of body apertures of the main body. The main body and the seal may reduce or prevent formation of a cooling film (due to the flow of air) over a surface of the main body opposite to the seal. As a result, a segmented response from each cooling aperture may be obtained. In other words, the apparatus may allow obtaining discrete data associated with each cooling aperture of the gas turbine engine component. Additionally, the surface of the main body opposite to the seal and a plurality of aperture wall surfaces that define the plurality of body apertures may have predetermined and/or calibrated infrared properties to facilitate the thermographic inspection. It may be noted that the infrared properties of the surface of the main body opposite to the seal may be different from the infrared properties of the plurality of aperture wall surfaces. Furthermore, the plurality of body apertures may be optimised to compensate for parallax errors of a thermography device including a thermal imaging camera, thereby facilitating the thermographic inspection.

In some embodiments, the seal includes a first major seal surface and a second major seal surface disposed opposite to the first major seal surface. Each seal aperture extends from the first major seal surface to the second major seal surface. The first major seal surface is configured to engage with the gas turbine engine component. The second major seal surface is configured to engage with the main body.

In some embodiments, the main body includes a first major body surface and a second major body surface disposed opposite to the first major body surface. Each body aperture extends from the first major body surface to the second major body surface. The first major body surface is configured to engage with the second major seal surface.

In some embodiments, the main body includes a plurality of aperture wall surfaces extending from the first major body surface to the second major body surface and defining the plurality of body apertures. Each aperture wall surface from the plurality of aperture wall surfaces has a set of first predetermined infrared properties. The second major body surface has a set of second predetermined infrared properties different from the set of first predetermined infrared properties.

In some embodiments, the main body further includes a central portion. The plurality of body apertures is disposed on the central portion. The main body further includes a peripheral portion surrounding the central portion. The main body further includes at least one pair of coupling apertures spaced apart from each other and disposed on the peripheral portion. Each of the at least one pair of coupling apertures extends through the main body.

In some embodiments, the apparatus further includes an inspection fixture including a receiving portion configured to receive and retain the gas turbine engine component. The inspection fixture further includes a coupling portion surrounding the receiving portion. The inspection fixture further includes at least one pair of coupling features corresponding to the at least one pair of coupling apertures of the main body. The at least one pair of coupling features is disposed on the coupling portion.

In some embodiments, the apparatus further includes at least one pair of coupling elements configured to extend through the at least one pair of coupling apertures and couple with the at least one pair of coupling features to detachably couple the main body to the inspection fixture.

In some embodiments, the main body defines a plane and a normal to the plane. The plurality of body apertures includes a set of first body apertures aligned with the normal. The plurality of body apertures further includes a set of second body apertures obliquely inclined to the normal.

In some embodiments, the main body and the seal are integral.

In some embodiments, the seal includes a Shore A hardness from 40 to 60.

In some embodiments, each seal aperture has a first diameter. Each body aperture has a second diameter. The first diameter is greater than the second diameter.

In a second aspect, there is provided a system for inspecting a gas turbine engine component having a plurality of cooling apertures. The system includes an apparatus. The apparatus includes a main body including a plurality of body apertures configured to at least partially align with the plurality of cooling apertures of the gas turbine engine component. Each body aperture from the plurality of body apertures extends through the main body. The main body further includes a plurality of aperture wall surfaces defining the plurality of body apertures. Each aperture wall surface from the plurality of aperture wall surfaces defines a corresponding body aperture from the plurality of body apertures. The apparatus further includes a seal connected or connectable to the main body. The seal is configured to engage with the gas turbine engine component. The seal includes a plurality of seal apertures corresponding to the plurality of body apertures. Each seal aperture from the plurality of seal apertures extends through the seal. The plurality of seal apertures is at least partially aligned with the plurality of body apertures of the main body, such that the plurality of seal apertures is disposed or disposable in fluid communication with the plurality of body apertures. The system further includes a thermography device configured to obtain thermal image data associated with a surface of the main body opposite to the seal and the plurality of aperture wall surfaces.

The system may improve an inspection of the gas turbine engine component using the thermography device. Specifically, the system may facilitate obtaining accurate and precise data associated with the plurality of cooling apertures of the gas turbine engine component using the thermography device. The system may be suitable for use with gas turbine engine components having complex designs of the plurality of cooling apertures.

The apparatus of the system may be arranged in a testing configuration with respect to the gas turbine engine component to carry out the inspection. In the testing configuration, the plurality of seal apertures is at least partially aligned with the plurality of cooling apertures, and the plurality of body apertures is at least partially aligned with the plurality of seal apertures, such that the plurality of body apertures is disposed in fluid communication with the plurality of cooling apertures of the gas turbine engine component.

The system may be used to carry out thermographic inspection of the gas turbine engine component using the apparatus in the testing configuration by directing a flow of air through the plurality of cooling apertures of the gas turbine engine component, such that the air egresses from the plurality of body apertures of the main body. The main body and the seal may reduce or prevent formation of a cooling film (due to the flow of air) over a surface of the main body opposite to the seal. As a result, the thermography device may capture a segmented response from each cooling aperture. In other words, the system may facilitate the thermography device to capture discrete data associated with each cooling aperture of the gas turbine engine component. Additionally, the surface of the main body opposite to the seal and the plurality of aperture wall surfaces may have predetermined and/or calibrated infrared properties to facilitate the thermographic inspection by the thermography device. It may be noted that the infrared properties of the surface of the main body opposite to the seal may be different from the infrared properties of the plurality of aperture wall surfaces. Furthermore, the plurality of body apertures may be optimised to compensate for parallax errors of the thermography device.

In some embodiments, the seal includes a first major seal surface and a second major seal surface disposed opposite to the first major seal surface. Each seal aperture extends from the first major seal surface to the second major seal surface. The first major seal surface is configured to engage with the gas turbine engine component. The second major seal surface is configured to engage with the main body.

In some embodiments, the main body includes a first major body surface and a second major body surface disposed opposite to the first major body surface. Each body aperture extends from the first major body surface to the second major body surface. The first major body surface is configured to engage with the second major seal surface. The thermography device is configured to obtain the thermal image data associated with the second major body surface and the plurality of aperture wall surfaces.

In some embodiments, the main body includes a plurality of aperture wall surfaces extending from the first major body surface to the second major body surface and defining the plurality of body apertures. Each aperture wall surface from the plurality of aperture wall surfaces has a set of first predetermined infrared properties. The second major body surface has a set of second predetermined infrared properties different from the set of first predetermined infrared properties.

In some embodiments, the main body further includes a central portion. The plurality of body apertures is disposed on the central portion. a peripheral portion surrounding the central portion and at least one pair of coupling apertures spaced apart from each other and disposed on the peripheral portion. Each of the at least one pair of coupling apertures extends through the main body.

In some embodiments, the apparatus further includes an inspection fixture including a receiving portion configured to receive and retain the gas turbine engine component. The inspection fixture further includes a coupling portion surrounding the receiving portion. The inspection fixture further includes at least one pair of coupling features corresponding to the at least one pair of coupling apertures of the main body. The at least one pair of coupling features is disposed on the coupling portion.

In some embodiments, the apparatus further includes at least one pair of coupling elements configured to extend through the at least one pair of coupling apertures and couple with the at least one pair of coupling features to detachably couple the main body to the inspection fixture.

In some embodiments, the main body defines a plane and a normal to the plane. The plurality of body apertures includes a set of first body apertures aligned with the normal. The plurality of body apertures further includes a set of second body apertures obliquely inclined to the normal.

In some embodiments, the main body and the seal are integral.

In some embodiments, the seal includes a Shore A hardness from 40 to 60.

In some embodiments, each seal aperture has a first diameter. Each body aperture has a second diameter. The first diameter is greater than the second diameter.

In a third aspect, there is provided a method for inspecting a gas turbine engine component. The method includes providing a gas turbine engine component including a plurality of cooling apertures. The method further includes providing an apparatus. The apparatus includes a main body including a plurality of body apertures configured to at least partially align with the plurality of cooling apertures of the gas turbine engine component. Each body aperture from the plurality of body apertures extends through the main body. The main body further includes a plurality of aperture wall surfaces defining the plurality of body apertures. Each aperture wall surface from the plurality of aperture wall surfaces defines a corresponding body aperture from the plurality of body apertures. The apparatus further includes a seal including a plurality of seal apertures corresponding to the plurality of body apertures. Each seal aperture from the plurality of seal apertures extends through the seal. The plurality of seal apertures is at least partially aligned with the plurality of body apertures of the main body. The method further includes connecting the seal to the main body, such that the plurality of seal apertures is disposed in fluid communication with the plurality of body apertures. The method further includes engaging the gas turbine engine component with the seal of the apparatus, such that the plurality of cooling apertures aligns with the plurality of seal apertures. The method further includes directing a flow of air through the plurality of cooling apertures. The method further includes obtaining thermal image data associated with a surface of the main body opposite to the seal and the plurality of aperture wall surfaces. The method further includes determining an inspection parameter associated with the plurality of cooling apertures based on the thermal image data.

The method may improve an inspection of the gas turbine engine component. Specifically, the method may facilitate obtaining accurate and precise data associated with the plurality of cooling apertures of the gas turbine engine component. The method may be suitable for obtaining accurate and precise thermal image data associated with the plurality of cooling apertures having complex designs.

The main body and the seal of the apparatus may reduce or prevent formation of a cooling film (due to the flow of air) over a surface of the main body opposite to the seal. As a result, the thermal image data may include a segmented response from each cooling aperture. In other words, the thermal image data may include discrete data associated with each cooling aperture of the gas turbine engine component. Therefore, the inspection parameter determined by the method may be accurate.

In some embodiments, the inspection parameter being a blockage parameter.

In some embodiments, engaging the gas turbine engine component with the seal of the apparatus includes either retaining the main body in a fixed position and moving the gas turbine engine component towards the main body, such that the gas turbine engine component engages with the seal, or retaining the gas turbine engine component in a fixed position and moving the main body towards the gas turbine engine component, such that the gas turbine engine component engages with the seal.

In some embodiments, engaging the gas turbine engine component with the seal of the apparatus includes receiving and retaining the gas turbine engine component in an inspection fixture, and detachably coupling, via at least one pair of coupling elements, the main body with the inspection fixture, such that the gas turbine engine component engages with the seal.

### BRIEF DESCRIPTION OF THE DRAWINGS

Embodiments will now be described by way of example only, with reference to the Figures, in which:
**FIG.** 1 is a cross-sectional view of a portion of a gas turbine engine component having a plurality of cooling apertures;
**FIG.** 2 is a cross-sectional view of a portion of a system including an apparatus in accordance with an embodiment of the present disclosure;
**FIG. 3A** is a bottom perspective view of the apparatus shown in FIG. 2;
**FIG. 3B** is a top perspective view of the apparatus shown in FIGS. 2 and 3A;
**FIG.** 4 is an exploded perspective view of the apparatus of FIGS 2, 3A and 3B;
**FIG. 5A** is a schematic thermogram obtained by a thermography device during inspection of the gas turbine engine component using the apparatus;
**FIG. 5B** is a schematic thermogram obtained by the thermography device during inspection of the gas turbine engine component using the apparatus; and
**FIG.** 6 is a flowchart depicting various steps of a method for inspecting a gas turbine engine component.

### DETAILED DESCRIPTION

Aspects and embodiments of the present disclosure will now be discussed with reference to the accompanying figures. Further aspects and embodiments will be apparent to those skilled in the art.

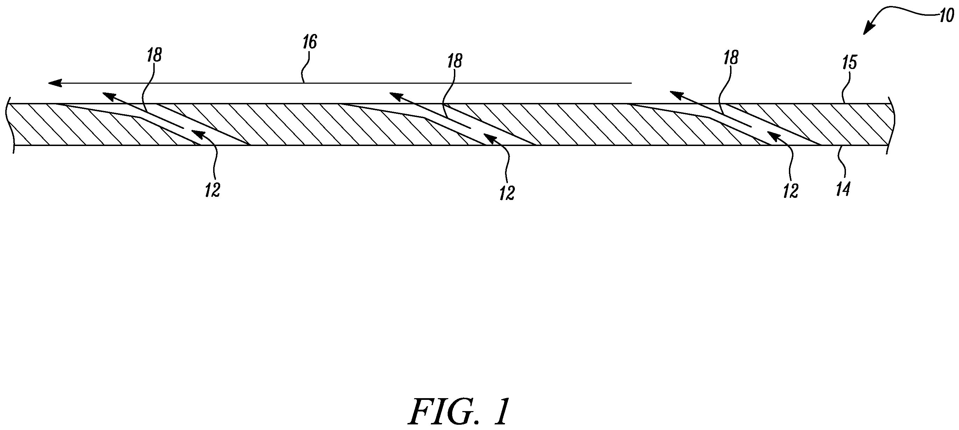

**FIG.** 1 shows a cross-sectional view of a portion of a gas turbine engine component 10. The gas turbine engine component 10 includes a plurality of cooling apertures 12. The gas turbine engine component 10 includes a first major surface 14 and a second major surface 15 disposed opposite to the first major surface 14. Each cooling aperture 12 from the plurality of cooling apertures 12 may extend from the first major surface 14 to the second major surface 15. In other words, each cooling aperture 12 may be a through-aperture. The plurality of cooling apertures 12 may have complex designs depending upon on desired application attributes of the gas turbine engine component 10.

The second major surface 15 may be a hot-side surface of the gas turbine engine component 10. Specifically, the second major surface 15 may be exposed to a high temperature environment during use of the gas turbine engine component 10. The plurality of cooling apertures 12 may be configured to direct a flow of air 18 (depicted by arrows in FIG. 1) in order to provide thermal protection to the gas turbine engine component 10. In some cases, the plurality of cooling apertures 12 may be configured to direct the air 18 so as to form a cooling film 16 (depicted by an arrow in FIG. 1) over the second major surface 15 of the gas turbine engine component 10. The air 18 may correspond to a cooling fluid.

The gas turbine engine component 10 may be a heatshield, a liner, and a tile of a combustor of the gas turbine engine. As another example, the gas turbine engine component 10 may be turbine blade of the gas turbine engine.

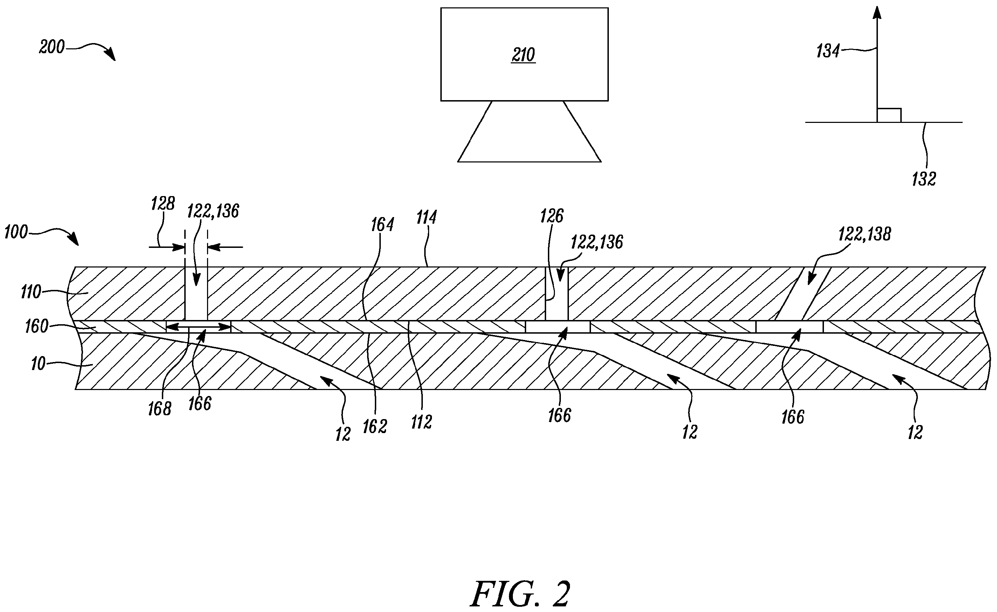

**FIG.** 2 shows a cross-sectional view of a portion of a system 200 for inspecting a gas turbine engine component (e.g., the gas turbine engine component 10) having a plurality of cooling apertures in accordance with an embodiment of the present disclosure.

The system 200 includes an apparatus 100. The apparatus 100 includes a main body 110 including a plurality of body apertures 122 configured to at least partially align with the plurality of cooling apertures 12 of the gas turbine engine component 10. Each body aperture 122 from the plurality of body apertures 122 extends through the main body 110. Specifically, the main body 110 includes a first major body surface 112 and a second major body surface 114 disposed opposite to the first major body surface 112. Each body aperture 122 may extend from the first major body surface 112 to the second major body surface 114.

The main body 110 further includes a plurality of aperture wall surfaces 126 defining the plurality of body apertures 122. The plurality of aperture wall surfaces 126 may extend from the first major body surface 112 to the second major body surface 114. Each aperture wall surface 126 from the plurality of aperture wall surfaces 126 defines a corresponding body aperture 122 from the plurality of body apertures 122. Each aperture wall surface 126 may be continuous and discrete.

The apparatus 100 further includes a seal 160 connected or connectable to the main body 110. The seal 160 may be detachably connectable or permanently connectable to the main body 110. The seal 160 is configured to engage with the gas turbine engine component 10. Specifically, the seal 160 may be configured to sealingly engage with the gas turbine engine component 10. The seal 160 may have a geometry and a curvature that matches with the gas turbine engine component 10. The seal 160 and the main body 110 may be designed to optimise sealing with the gas turbine engine component 10. For example, in some cases, the seal 160 and the main body 110 may be designed to provide adequate pressure across an interface between the seal 160 and the gas turbine engine component 10 to optimise sealing.

The seal 160 includes a plurality of seal apertures 166 corresponding to the plurality of body apertures 122. Each seal aperture 166 from the plurality of seal apertures 166 extends through the seal 160. Specifically, the seal 160 includes a first major seal surface 162 and a second major seal surface 164 disposed opposite to the first major seal surface 162. Each seal aperture 166 may extend from the first major seal surface 162 to the second major seal surface 164.

The plurality of seal apertures 166 is at least partially aligned with the plurality of body apertures 122 of the main body 110, such that the plurality of seal apertures 166 is disposed or disposable in fluid communication with the plurality of body apertures 122.

The apparatus 100 may improve an inspection of the gas turbine engine component 10. Specifically, the apparatus 100 may facilitate obtaining accurate and precise data associated with the plurality of cooling apertures 12 of the gas turbine engine component 10. The apparatus 100 may be suitable for use with gas turbine engine components (such as the gas turbine engine component 10) having complex designs of the plurality of cooling apertures 12.

The apparatus 100 may be arranged in a testing configuration (as shown in FIG. 2) with respect to the gas turbine engine component 10 to carry out the inspection. In the testing configuration, the plurality of seal apertures 166 is at least partially aligned with the plurality of cooling apertures 12, and the plurality of body apertures 122 is at least partially aligned with the plurality of seal apertures 166, such that the plurality of body apertures 122 is disposed in fluid communication with the plurality of cooling apertures 12 of the gas turbine engine component 10.

The main body 110 and the seal 160 may reduce or prevent formation of a cooling film (due to a flow of air directed through the plurality of cooling apertures 12) over a surface of the main body 110 opposite to the seal 160 (i.e., the second major body surface 114). As a result, a segmented response from each cooling aperture 12 may be obtained. In other words, the apparatus 100 may allow obtaining discrete data associated with each cooling aperture 12 of the gas turbine engine component 10.

As discussed above, the seal 160 is connected or connectable to the main body 110. The second major seal surface 164 may be configured to engage with the main body 110. Further, the first major body surface 112 may be configured to engage with the second major seal surface 164. Moreover, as discussed above, the seal 160 is configured to engage with the gas turbine engine component 10. Specifically, the first major seal surface 162 of the seal 160 may be configured to engage with the gas turbine engine component 10.

The main body 110 and the seal 160 may be designed according to the gas turbine engine component 10 to be inspected. That is, the shape and size of each of the main body 110 and the seal 160 may be dependent on the gas turbine engine component 10.

The main body 110 may be made from any suitable material, such that the main body 110 is capable of withstand clamping loads. As an example, the main body 110 may be made from a metal, such as stainless steel. As another example, the main body 110 may be made from a suitable stiff polymer. The main body 110 may be designed to have a strength depending upon the size and shape of the gas turbine engine component 10 and inspection parameters. In some examples, the main body 110 may have a low thermal effusivity. The thermal effusivity of the main body 110 may be defined as the square root of the product of the thermal conductivity and the volumetric heat capacity of the main body 110.

The seal 160 may be made from any suitable material, such that the seal 160 is rigid enough to prevent excessive deformation (which may result in misalignment of the plurality of cooling apertures 12 and the plurality of seal apertures 166, thereby resulting in undesired blockage), but flexible enough to adequately seal with the gas turbine engine component 10 to minimise leakage between the plurality of cooling apertures 12. As an example, the seal 160 may be made from a material having a suitable Shore A hardness. In some embodiments, the seal 160 includes a Shore A hardness from 40 to 60. In some embodiments, the Shore A hardness of the seal 160 may vary across its thickness (i.e., from the first major seal surface 162 to the second major seal surface 164). This may improve the sealing performance of the seal 160. As another example, the seal 160 may be made from a rubber.

In some embodiments, each seal aperture 166 has a first diameter 168. Further, each body aperture 122 has a second diameter 128. The first diameter 168 may be greater than the second diameter 128. This may facilitate passage of the air 18 (shown in FIG. 1) from the plurality of cooling apertures 12 to the plurality of body apertures 122, thereby reducing undesired blockage of the plurality of cooling apertures 12 by the seal 160.

In some embodiments, the main body 110 and the seal 160 are integral. In some embodiments, the main body 110 and the seal 160 may be integrally formed using an additive manufacturing method (e.g., 3D printing). Use of additive manufacturing may allow creation of complex profiled designs and precise apertures (specifically, the plurality of body apertures 122 and the plurality of seal apertures 166).

In some other embodiments, the seal 160 may be separate from the main body 110 and connected to the main body 110 using a suitable attachment method. For example, the main body 110 may be made from stainless steel, the seal 160 may be made from a rubber, and the seal 160 may be bonded to the main body 110.

The system 200 further includes a thermography device 210 configured to obtain thermal image data associated with a surface of the main body 110 opposite to the seal 160 and the plurality of aperture wall surfaces 126. Specifically, the thermography device 210 may be configured to obtain the thermal image data associated with the second major body surface 114 and the plurality of aperture wall surfaces 126. The thermography device 210 may include, for example, a thermal imaging camera.

In the testing configuration, the thermal image data obtained by the thermography device 210 may include a segmented response from each cooling aperture 12. In other words, the thermography device 210 may capture discrete data associated with each cooling aperture 12 of the gas turbine engine component 10. This may allow determining accurate inspection parameters associated the plurality of cooling apertures 12.

In some embodiments, each aperture wall surface 126 may have a set of first predetermined infrared properties. For example, the set of first predetermined infrared properties may include a high infrared emissivity, a low infrared reflectivity, and a low infrared transmissivity. The set of first predetermined infrared properties (e.g., infrared emittance, infrared reflectance, and infrared transmittance) may be calibrated to improve thermographic inspection by the thermography device 210. Further, the second major body surface 114 may have a set of second predetermined infrared properties different from the set of first predetermined infrared properties. The set of second predetermined infrared properties (e.g., infrared emittance, infrared reflectance, and infrared transmittance) may be calibrated to improve thermographic inspection by the thermography device 210. In some embodiments, the main body 110 may further include a layer of a high emissivity paint or coating (not shown) disposed on the second major body surface 114. As compared to conventional techniques that include coating the gas turbine engine component 10 with high emissivity paint, the apparatus 100 may eliminate the need to remove the high emissivity paint from the gas turbine engine component 10 after inspection and before use of the gas turbine engine component 10.

In some embodiments, the main body 110 defines a plane 132 and a normal 134 to the plane 132. In some embodiments, the plane 132 may be defined by the second major body surface 114. The plurality of body apertures 122 may include a set of first body apertures 136 and a set of second body apertures 138. The set of first body apertures 136 may be aligned with the normal 134. The set of second body apertures 138 may be obliquely inclined to the normal 134. At least some second body apertures 138 from the set of second body apertures 138 may be configured to compensate for a parallax error of the thermography device 210.

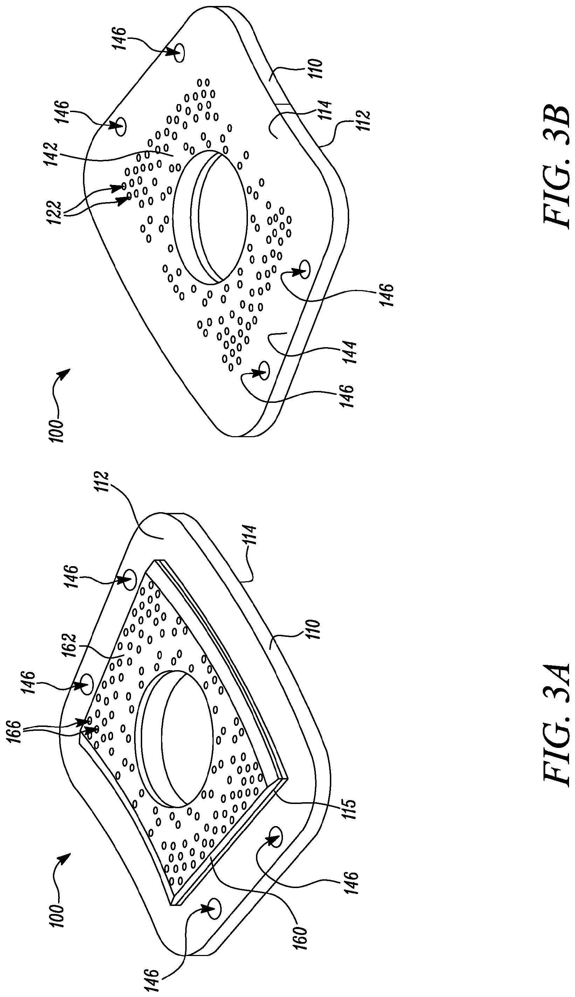

FIGS. 3A and 3B show perspective views of the apparatus 100 in accordance with an embodiment of the present disclosure. Specifically, **FIG. 3A** shows a bottom perspective view of the apparatus 100, and **FIG. 3B** shows top perspective view the apparatus 100.

Referring to FIGS. 3A and 3B, the main body 110 may further include a central portion 142 and a peripheral portion 144 surrounding the central portion 142. In some embodiments, the plurality of body apertures 122 may be disposed on the central portion 142. As shown in FIG. 3A, the main body 110 may include a platform 115 located on the central portion 142 and partially forming the first major body surface 112. The platform 115 may be shaped or contoured based on the gas turbine engine component 10. Further, the seal 160 may be connectable or connected to the platform 115.

The main body 110 may further include at least one pair of coupling apertures 146 spaced apart from each other and disposed on the peripheral portion 144. Each pair of coupling apertures 146 from the at least one pair of coupling apertures 146 may be disposed on the peripheral portion 144, such that the central portion 142 is disposed between the pair of coupling apertures 146. Each of the at least one pair of coupling apertures 146 extends through the main body 110. Specifically, each of the at least one pair of coupling apertures 146 may extend from the first major body surface 112 to the second major body surface 114.

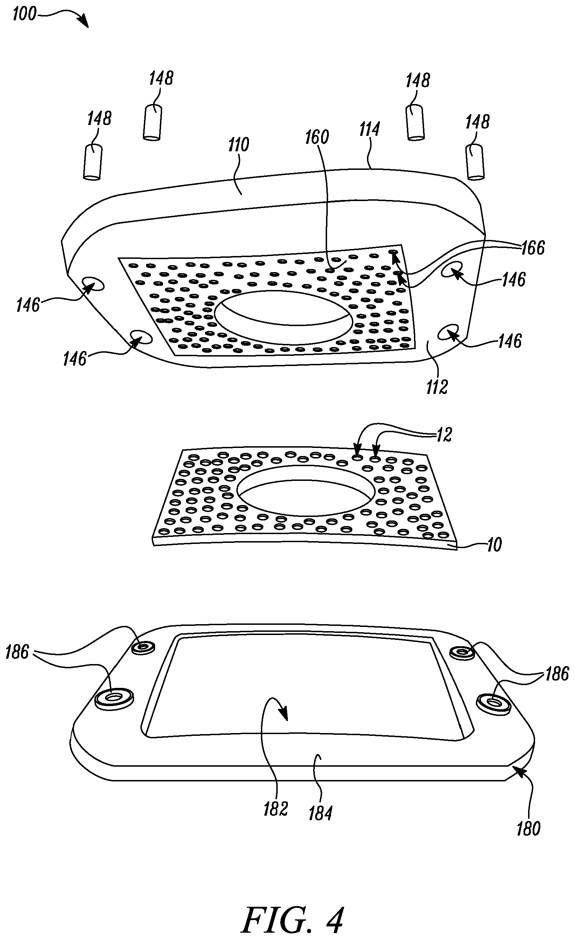

**FIG. 4** shows an exploded perspective view of the apparatus 100 in accordance with an embodiment of the present disclosure.

The apparatus 100 may further include an inspection fixture 180. The inspection fixture 180 may include a receiving portion 182 configured to receive and retain the gas turbine engine component 10. The receiving portion 182 may be shaped based on the gas turbine engine component 10. The inspection fixture 180 may further include a coupling portion 184 surrounding the receiving portion 182. The inspection fixture 180 may further include at least one pair of coupling features 186 corresponding to the at least one pair of coupling apertures 146 of the main body 110. The at least one pair of coupling features 186 is disposed on the coupling portion 184.

The main body 110 may be detachably connected to the inspection fixture 180 via the at least one pair of coupling features 186. Specifically, the apparatus 100 may further include at least one pair of coupling elements 148 configured to extend through the at least one pair of coupling apertures 146 and detachably couple with the at least one pair of coupling features 186 to detachably couple the main body 110 with the inspection fixture 180. The at least one pair of coupling elements 148 may include, for example, bolts, and the at least one pair of coupling features 186 may include, for example, nuts. It may be noted that various other techniques may be employed to detachably couple the main body 110 with the inspection fixture 180. For example, the main body 110 may be detachably coupled with the inspection fixture 180 via snap-fit features, and other fastening methods.

In use, the gas turbine engine component 10 may be positioned and retained in the receiving portion 182 of the inspection fixture 180. Subsequently, the main body 110 may be positioned on the inspection fixture 180, such that the at least one pair of coupling apertures 146 of the main body 110 at least partially align with the at least one at least one pair of coupling features 186 of the inspection fixture 180. Then, the at least one pair of coupling elements 148 may be inserted through the at least one pair of coupling apertures 146 and detachably coupled with the at least one pair of coupling features 186. Subsequently, the thermography device 210 may be used to obtain the thermal image data associated with the second major body surface 114 of the main body 110 and the plurality of aperture wall surfaces 126 to inspect the gas turbine engine component 10.

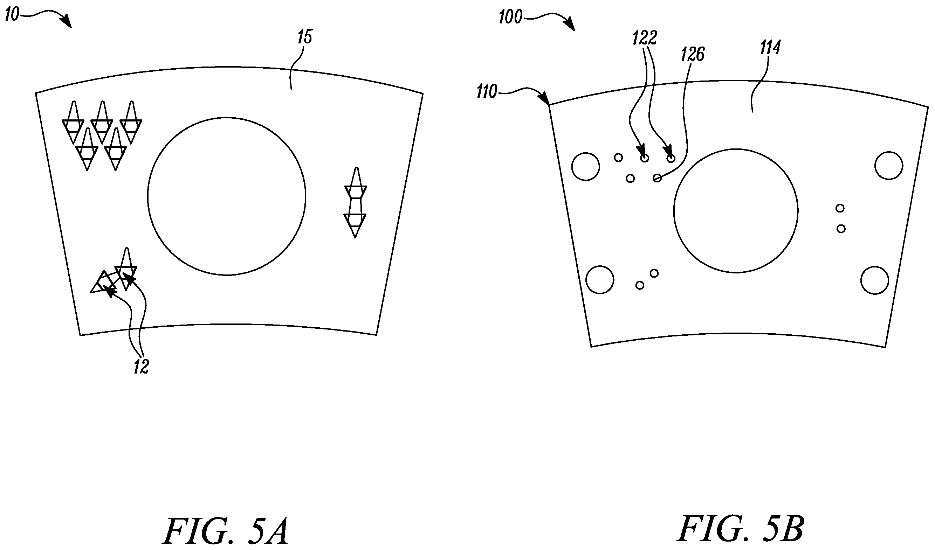

FIG. 5A shows a schematic thermogram obtained by the thermography device 210 (shown in FIG. 2) during inspection of the gas turbine engine component 10.

When air was directed through the plurality of cooling apertures 12 of the gas turbine engine component 10, a cooling film was formed over the second major surface 15 of the gas turbine engine component 10. As can be seen in FIG. 5A, the cooling film filled areas between adjacent cooling apertures 12 from the plurality of cooling apertures 12, thereby preventing accurate and/or precise inspection of the plurality of cooling apertures 12.

FIG. 5B shows a schematic thermogram of the gas turbine engine component 10 obtained by the thermography device 210 (shown in FIG. 2) using the apparatus 100.

Referring to FIGS. 2 and 5B, when the apparatus 100 was used for inspection of the gas turbine engine component 10, air that was directed through the plurality of cooling apertures 12 of the gas turbine engine component 10 emanated through the plurality of body apertures 122 of the main body 110. The apparatus 100, or more specifically, the seal 160 and the main body 110 reduced formation of a cooling film over the second major body surface 114 of the main body 110. As a result, a segmented response from each cooling aperture 12 was obtained by the thermography device 210.

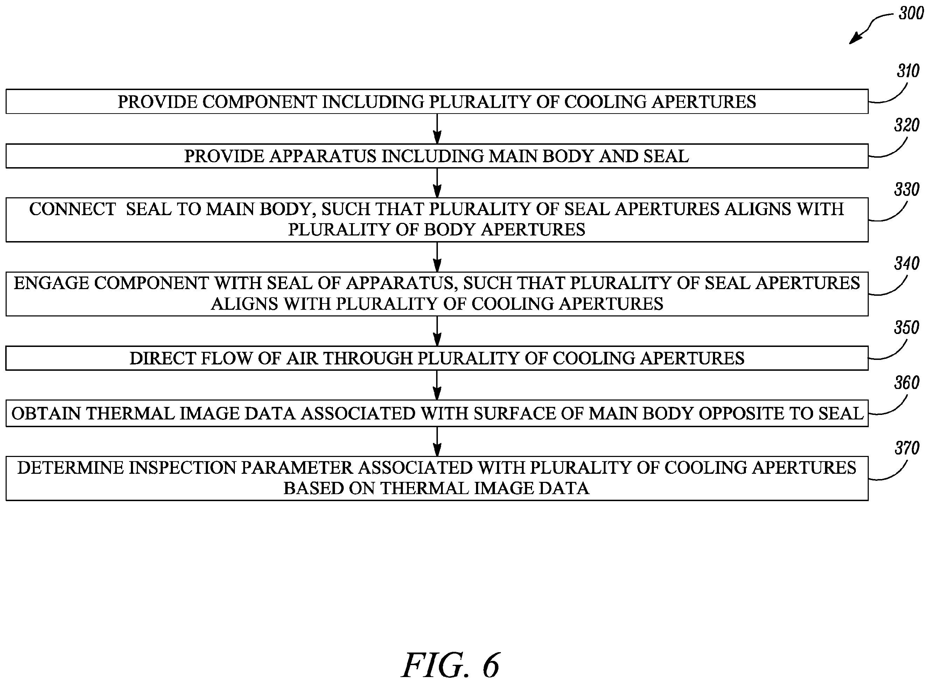

FIG. 6 shows a flowchart depicting various steps of a method 300 of inspecting a gas turbine engine component (e.g., the gas turbine engine component 10 of FIG. 1) having a plurality of cooling apertures in accordance with an embodiment of the present disclosure.

At step 310, the method 300 includes providing a gas turbine engine component including a plurality of cooling apertures. Referring to FIG. 1, for example, the method 300 may include providing the gas turbine engine component 10.

At step 320, the method 300 further includes providing an apparatus. The apparatus includes a main body including a plurality of body apertures configured to at least partially align with the plurality of cooling apertures of the gas turbine engine component. Each body aperture from the plurality of body apertures extends through the main body. The main body further includes a plurality of aperture wall surfaces defining the plurality of body apertures. Each aperture wall surface from the plurality of aperture wall surfaces defines a corresponding body aperture from the plurality of body apertures. The apparatus further includes a seal including a plurality of seal apertures corresponding to the plurality of body apertures. Each seal aperture from the plurality of seal apertures extends through the seal. The plurality of seal apertures is at least partially aligned with the plurality of body apertures of the main body. Referring to FIG. 2, for example, the method 300 may include providing the apparatus 100.

At step 330, the method 300 further includes connecting the seal to the main body, such that the plurality of seal apertures is disposed in fluid communication with the plurality of body apertures. Referring to FIG. 2, for example, the method 300 may include connecting the seal 160 to the main body 110, such that the plurality of seal apertures 166 is disposed in fluid communication with the plurality of body apertures 122. Any suitable method may be employed to connect the seal 160 to the main body 110.

At step 340, the method 300 further includes engaging the gas turbine engine component with the seal of the apparatus, such that the plurality of cooling apertures aligns with the plurality of seal apertures. Referring to FIG. 2, for example, the method 300 may include engaging the gas turbine engine component 10 with the seal 160 of the apparatus 100, such that the plurality of cooling apertures 12 aligns with the plurality of seal apertures 166.

In some embodiments, engaging the gas turbine engine component with the seal of the apparatus may include either retaining the main body in a fixed position and moving the gas turbine engine component towards the main body, such that the gas turbine engine component engages with the seal, or retaining the gas turbine engine component in a fixed position and moving the main body towards the gas turbine engine component, such that the gas turbine engine component engages with the seal.

Referring to FIG. 2, for example, engaging the gas turbine engine component 10 with the seal 160 of the apparatus 100 may include retaining the main body 110 in a fixed position and moving the gas turbine engine component 10 towards the main body 110, such that the gas turbine engine component 10 engages with the seal 160. In another example, engaging the gas turbine engine component 10 with the seal 160 of the apparatus 100 may include retaining the gas turbine engine component 10 in a fixed position and moving the main body 110 towards the gas turbine engine component 10, such that the gas turbine engine component 10 engages with the seal 160. Any suitable retaining mechanism may be used to retain the main body 110 and/or the gas turbine engine component 10 in a fixed position.

In some embodiments, engaging the gas turbine engine component with the seal of the apparatus includes receiving and retaining the gas turbine engine component in an inspection fixture and detachably coupling, via at least one pair of coupling elements, the main body with the inspection fixture, such that the gas turbine engine component engages with the seal. Referring to FIG. 4, for example, engaging the gas turbine engine component 10 with the seal 160 of the apparatus 100 may include receiving and retaining the gas turbine engine component 10 in the inspection fixture 180 and detachably coupling, via the at least one pair of coupling elements 148, the main body 110 with the inspection fixture 180, such that the gas turbine engine component 10 engages with the seal 160.

At step 350, the method 300 further includes directing a flow of air through the plurality of cooling apertures. Referring to FIG. 1, for example, the method 300 may include directing the flow of air 18 through the plurality of cooling apertures 12.

At step 360, the method 300 further includes obtaining thermal image data associated with a surface of the main body opposite to the seal and the plurality of aperture wall surfaces. Referring to FIGS. 2 and 5B, for example, the method 300 may further include obtaining thermal image data associated with the surface of the main body 110 opposite to the seal 160 and the plurality of aperture wall surfaces 126. Specifically, the method 300 may include obtaining the thermal image data associated with the second major body surface 114 of the main body 110 and the plurality of aperture wall surfaces 126 using the thermography device 210.

At step 370, the method 300 further includes determining an inspection parameter associated with the plurality of cooling apertures based on the thermal image data. The inspection parameter may include any parameter associated with the plurality of cooling apertures.

In some embodiments, the inspection parameter includes a blockage parameter. The blockage parameter may be indicative of which of the plurality of cooling apertures 12 of the gas turbine engine component 10 are blocked, i.e., block flow of air therethrough.

The apparatus, system, and method of the present disclosure may improve an inspection of the gas turbine engine component. Specifically, the apparatus, system, and method may facilitate obtaining accurate and precise data associated with the plurality of cooling apertures of the gas turbine engine component.

Various examples have been described, each of which comprise various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. An apparatus (100) for inspecting a gas turbine engine component (10) having a plurality of cooling apertures (12), the apparatus (100) comprising:
a main body (110) comprising a plurality of body apertures (122) configured to at least partially align with the plurality of cooling apertures (12) of the gas turbine engine component (10), wherein each body aperture (122) from the plurality of body apertures (122) extends through the main body (110); and
a seal (160) connected or connectable to the main body (110) and configured to engage with the gas turbine engine component (10), the seal (160) comprising a plurality of seal apertures (166) corresponding to the plurality of body apertures (122), wherein each seal aperture (166) from the plurality of seal apertures (166) extends through the seal (160), and wherein the plurality of seal apertures (166) is at least partially aligned with the plurality of body apertures (122) of the main body (110), such that the plurality of seal apertures (166) is disposed or disposable in fluid communication with the plurality of body apertures (122).

2. The apparatus (100) of claim 1, wherein the seal (160) comprises a first major seal surface (162) and a second major seal surface (164) disposed opposite to the first major seal surface (162), wherein each seal aperture (166) extends from the first major seal surface (162) to the second major seal surface (164), wherein the first major seal surface (162) is configured to engage with the gas turbine engine component (10), and wherein the second major seal surface (164) is configured to engage with the main body (110).

3. The apparatus (100) of claim 2, wherein the main body (110) comprises a first major body surface (112) and a second major body surface (114) disposed opposite to the first major body surface (112), wherein each body aperture (122) extends from the first major body surface (112) to the second major body surface (114), and wherein the first major body surface (112) is configured to engage with the second major seal surface (164).

4. The apparatus (100) of claim 3, wherein the main body (110) comprises a plurality of aperture wall surfaces (126) extending from the first major body surface (112) to the second major body surface (114) and defining the plurality of body apertures (122), wherein each aperture wall surface (126) from the plurality of aperture wall surfaces (126) has a set of first predetermined infrared properties, and wherein the second major body surface (114) has a set of second predetermined infrared properties different from the set of first predetermined infrared properties.

5. The apparatus (100) of any preceding claim, wherein the main body (110) further comprises:
a central portion (142), wherein the plurality of body apertures (122) is disposed on the central portion (142);
a peripheral portion (144) surrounding the central portion (142); and
at least one pair of coupling apertures (146) spaced apart from each other and disposed on the peripheral portion (144), wherein each of the at least one pair of coupling apertures (146) extends through the main body (110).

6. The apparatus (100) of claim 5, further comprising an inspection fixture (180) comprising:
a receiving portion (182) configured to receive and retain the gas turbine engine component (10);
a coupling portion (184) surrounding the receiving portion (182); and
at least one pair of coupling features (186) corresponding to the at least one pair of coupling apertures (146) of the main body (110), wherein the at least one pair of coupling features (186) is disposed on the coupling portion (184).

7. The apparatus (100) of claim 6, further comprising at least one pair of coupling elements (148) configured to extend through the at least one pair of coupling apertures (146) and detachably couple with the at least one pair of coupling features (186) to detachably couple the main body (110) to the inspection fixture (180).

8. The apparatus (100) of any preceding claim, wherein the main body (110) defines a plane (132) and a normal (134) to the plane (132), wherein the plurality of body apertures (122) comprises:
a set of first body apertures (136) aligned with the normal (134); and
a set of second body apertures (138) obliquely inclined to the normal (134).

9. The apparatus (100) of any preceding claim, wherein the main body (110) and the seal (160) are integral.

10. A system (200) for inspecting a gas turbine engine component (10) that has a plurality of cooling apertures (12), the system (200) comprising:
an apparatus (100) comprising:
a main body (110) comprising:
a plurality of body apertures (122) configured to at least partially align with the plurality of cooling apertures (12) of the gas turbine engine component (10), wherein each body aperture (122) from the plurality of body apertures (122) extends through the main body (110); and
a plurality of aperture wall surfaces (126) defining the plurality of body apertures (122), wherein each aperture wall surface (126) from the plurality of aperture wall surfaces (126) defines a corresponding body aperture (122) from the plurality of body apertures (122); and
a seal (160) connected or connectable to the main body (110) and configured to engage with the gas turbine engine component (10), the seal (160) comprising a plurality of seal apertures (166) corresponding to the plurality of body apertures (122), wherein each seal aperture (166) from the plurality of seal apertures (166) extends through the seal (160), and wherein the plurality of seal apertures (166) is at least partially aligned with the plurality of body apertures (122) of the main body (110), such that the plurality of seal apertures (166) is disposed or disposable in fluid communication with the plurality of body apertures (122); and
a thermography device (210) configured to obtain thermal image data associated with a surface of the main body (110) opposite to the seal (160) and the plurality of aperture wall surfaces (126).

11. The system (200) of claim 10, wherein the seal (160) comprises a first major seal surface (162) and a second major seal surface (164) disposed opposite to the first major seal surface (162), wherein each seal aperture (166) extends from the first major seal surface (162) to the second major seal surface (164), wherein the first major seal surface (162) is configured to engage with the gas turbine engine component (10), and wherein the second major seal surface (164) is configured to engage with the main body (110).

12. The system (200) of claim 11, wherein the main body (110) comprises a first major body surface (112) and a second major body surface (114) disposed opposite to the first major body surface (112), wherein each body aperture (122) extends from the first major body surface (112) to the second major body surface (114), wherein the first major body surface (112) is configured to engage with the second major seal surface (164), and wherein the thermography device (210) is configured to obtain the thermal image data associated with the second major body surface (114) and the plurality of aperture wall surfaces (126).

13. A method (300) for inspecting a gas turbine engine component (10), the method (300) comprising the steps of:
providing a gas turbine engine component (10) comprising a plurality of cooling apertures (12);
providing an apparatus (100) comprising:
a main body (110) comprising:
a plurality of body apertures (122) configured to at least partially align with the plurality of cooling apertures (12) of the gas turbine engine component (10), wherein each body aperture (122) from the plurality of body apertures (122) extends through the main body (110); and
a plurality of aperture wall surfaces (126) defining the plurality of body apertures (122), wherein each aperture wall surface (126) from the plurality of aperture wall surfaces (126) defines a corresponding body aperture (122) from the plurality of body apertures (122); and
a seal (160) comprising a plurality of seal apertures (166) corresponding to the plurality of body apertures (122), wherein each seal aperture (166) from the plurality of seal apertures (166) extends through the seal (160), and wherein the plurality of seal apertures (166) is at least partially aligned with the plurality of body apertures (122) of the main body (110);
connecting the seal (160) to the main body (110), such that the plurality of seal apertures (166) is disposed in fluid communication with the plurality of body apertures (122);
engaging the gas turbine engine component (10) with the seal (160) of the apparatus (100), such that the plurality of cooling apertures (12) aligns with the plurality of seal apertures (166);
directing a flow of air (18) through the plurality of cooling apertures (12);
obtaining thermal image data associated with a surface of the main body (110) opposite to the seal (160) and the plurality of aperture wall surfaces (126); and
determining an inspection parameter associated with the plurality of cooling apertures (12) based on the thermal image data, the inspection parameter optionally being a blockage parameter.

14. The method (300) of claim 13, wherein engaging the gas turbine engine component (10) with the seal (160) of the apparatus (100) comprises:
either retaining the main body (110) in a fixed position; and
moving the gas turbine engine component (10) towards the main body (110), such that the gas turbine engine component (10) engages with the seal (160); or
retaining the gas turbine engine component (10) in a fixed position; and
moving the main body (110) towards the gas turbine engine component (10), such that the gas turbine engine component (10) engages with the seal (160).

15. The method (300) of any claim 13 or 14, wherein engaging the gas turbine engine component (10) with the seal (160) of the apparatus (100) comprises:
receiving and retaining the gas turbine engine component (10) in an inspection fixture (180); and
detachably coupling, via at least one pair of coupling elements (148), the main body (110) with the inspection fixture (180), such that the gas turbine engine component (10) engages with the seal (160).
